# EUROPEAN PATENT SPECIFICATION

(11) **EP 0 897 879 B1**
(45) Date of publication and mention of the grant of the patent: **02.05.2003**
(21) Application number: 97114257.5
(22) Date of filing: 19.08.1997
(51) Int. Cl.: B65D 81/00, C08K 3/00, C08J 5/18, C09D 5/00

(54) **Far infrared rays-generating article**
Gegenstand welcher Strahlen in fernen Infrarot erzeugt
Article capable de générer les radiations dans l'extrême infrarouge

(43) Date of publication of application: 24.02.1999
(73) Proprietor: Ogasawara, Hitoshi, Toyohashi-shi, Aichi-ken (JP)
(72) Inventor: Hitoshi, Ogasawara, Toyohashi-shi, Aichi-ken (JP); Toshikazu, Matsuhashi, Toyokawa-shi, Aichi-ken (JP); Takayasu, Mizuno, Atsumi-gun, Aichi-ken (JP); Kiyoshi, Nakano, Gamagohri-shi, Aichi-ken (JP); Junya, Kato, Toyokawa-shi, Aichi-ken (JP)
(74) Representative: Dreiss, Fuhlendorf, Steimle & Becker

(56) References cited:
- DATABASE WPI Section Ch, Week 9031 Derwent Publications Ltd., London, GB; Class A92, AN 90-236633 XP002052922 & JP 02 166 072 A (MQUP KK) , 26 June 1990
- DATABASE WPI Section Ch, Week 9722 Derwent Publications Ltd., London, GB; Class A23, AN 97-241906 XP002052923 & JP 09 077 961 A (NIPPON ESTER CO LTD) , 25 March 1997
- DATABASE WPI Section Ch, Week 9726 Derwent Publications Ltd., London, GB; Class D13, AN 97-284069 XP002052924 & JP 09 103 234 A (DAIHO KOGYO KK) , 22 April 1997
- DATABASE WPI Section Ch, Week 9614 Derwent Publications Ltd., London, GB; Class A93, AN 96-137659 XP002052925 & KR 9 405 641 B (LUCKY CO LTD) , 22 June 1994

## Description

### BACKGROUND OF THE INVENTION

### Field of the invention :

The present invention relates to a far infrared rays-generating article in which good use is made of a far infrared rays-generating material which can emit far infrared rays not only at high temperature but also at relatively low temperature such as ambient temperature, for example, a colored cordierite (i.e., cordierite-class) natural rock from Taiwan, obsidian from Persian, granite porphyry from Mongolia.

### Prior art:

Recently, a colored cordierite natural rock was discovered , which can emit far infrared rays even at relatively low temperature such as ambient temperature for a long time, which is a natural mineral or rock produced by eruption of a volcano at an ocean floor, and which is referred to as "sansenseki", or "jamonseki" in Japan and is referred to by a word meaning "five-color stone" in Taiwan. (The "jamonseki" is referred to serpentine.) The country of origin of the mineral is Taiwan.

This mineral has not been investigated sufficiently; however, investigations up to the present prove that it emits infrared rays and far infrared rays even at ambient-temperature. If common stones and ceramics are heated to high temperature, they can emit infrared rays and far infrared rays when they are kept at high temperature. The colored cordierite natural rock is evidently different from them in that the cordierite natural rock can emit infrared and far infrared rays even at ambient temperature.

JP-A-02-166,072 discloses a food keeping container, which consists of a container body which is made by molding a mixture of the powder of a far-infrared ray generating substances and synthetic resin material using metal die. The food keeping container is made by shaping into the form of a bag the synthetic resin sheet which has previously been mixed with the powder of a far-infrared ray generating substance. Since the synthetic resins are mixed with the aforesaid powder, the far-infrared rays are irradiated in such container, whereby the food inside the container can have a long shelf life. In addition, the food odor is removed and its discoloration is retarded and, in the case of dressed meat, etc., its rapid curing can be attained. The purpose of the container is to permit foods to be preserved for a long time by forming a food container body of the synthetic resins mixed with the powder of a far-infrared ray generating substance using metal die.

JP-A-09-077,961 discloses a composition which is obtained by blending a polyester with 3 to 8 wt.% mixture of a mica having a mean particle diameter of 2.5 to 5.0 µm and a mica having a mean particle diameter of 8.0 to 13.0 µm at a weight ratio of the former mica to the latter of (4:6) to (8:2). The problem to be solved is to obtain a polyester composition which has an excellent capability of emitting far infrared rays and can produce fibers and fibrous products with good operating characteristics.

JP-A-09-103,234 discloses a antimicrobial/disinfectant box comprises a box main body for housing various perishable foods such as fresh fish and perishable vegetables and an antimicrobial/disinfectant layer which is formed in the inner circumference face and comprises a mixture of antimicrobial/disinfectant powder and far infrared ray generating powder as a main component of agent action. The proliferation of various germs attached to the surface of fish and various perishable foods such as perishable vegetables housed in the box main body are suppressed by the operation of the antimicrobial/disinfectant layer to extremely raise preservation effect. The problem bo be solved is to provide an antimicrobial/disinfectant box capable of increasing an additional value and differentiating products, making a use side maintain the freshness of a housed perishable food for a long period of time and a producer side have antimicrobial/disinfectant properties.

As an invention in which the colored cordierite natural rock is used, an invention disclosed in JP-A-3/271452 is known. In the invention the colored cordierite natural rock is utilized as it is or under the condition that particles thereof are incorporated into cement.

In an article in which the colored cordierite natural rock is incorporated into cement, only the particles present in the surface thereof emit far infrared rays. Thus, an advantage which can be obtained by incorporation of the colored cordierite natural rock is small . Similarly in the case in which the colored cordierite natural rock is used as it is, a far infrared rays-emitting effect can be gained only from the surface thereof.

The colored cordierite natural rock has a very strong absorption capability, so that the surface thereof can absorb impurities, for example, rubbish, organic or inorganic materials. Therefore, it is difficult to maintain the far infrared rays-emitting effect of the colored cordierite natural rock for a long time. In particular, when the colored cordierite natural rock is used in water, it absorbs impurities such as bleaching chlorine very strongly. As a result, a period when the colored cordierite natural rock can emit far infrared rays inconveniently shortens.

The same inconveniences take place, in the case in which other far infrared rays-generating materials are used, such as obsidian from Persian and granite porphyry from Mongolia.

### SUMMARY OF THE INVENTION

An object of the present invention is to provide a far infrared rays-generating article which can exhibit a far infrared rays-generating effect for a long time by making good use of a far infrared rays-generating material which can emit the rays at low temperature such as ambient temperature, as well as at high temperature.

The present invention is a far infrared rays-generating article comprising a body into which particles of a particular far infrared rays-generating material which can generate far infrared rays at ambient or room temperature and higher are incorporated, and through which visible rays can penetrate under the condition that the particles are incorporated.

The wording "visible rays can penetrate under the condition that the particles are incorporated" means that when the far infrared rays-generating article is exposed to sunlight (natural light), any light which penetrates through the article can be perceived by ordinary people who watch toward the article . The characteristic that "visible rays can penetrate under the condition that the particles are incorporated" is very important for effecting advantages of the invention. Under this condition, far infrared rays can also penetrate through the body (i.e., manufactured article) as an element of the invention. This is based on an observation that the advantages of the invention reduce remarkably or are lost, when visible rays cannot penetrate through the body into which the particles of the far infrared rays-generating material are incorporated, for example, by coloring or incorporation of a large amount of the particles.

In the present invention, far infrared rays generated from the particles in the body penetrate through the body and emit outside the body. This matter can be easily checked indirectly by perceiving the penetration of visible rays. This is also an advantage of the invention.

The surface area of the far infrared rays-generating material can be increased by pulverizing and incorporating the material into the body. This is an advantage over the cases in the far infrared rays- generating material is used as it is and under the condition that it is dispersed on the surface of the body.

The invention also has an advantage that effects of the far infrared rays can be given even at ambient temperature, since the rays can be emitted at ambient temperature. In other words, the invention makes it possible to prevent decay resulted from bacteria and decay from other factors (chemicals) at ambient temperature. Also, an embodiment of the invention has an effect of anti-mold.

Even if the surface of the body absorbs impurities (e.g., rubbish, organic or inorganic materials) present around it, they can be easily removed away by means of wiping the surface with a piece of cloth or washing the surface. For this reason, the far infrared rays- generating effect can be easily maintained for a long time. This is also an advantage over the case in which the far infrared rays-generating material is used as it is.

Another embodiment of the invention is a far infrared rays-generating, containing article comprising a body into which particles of a particular far infrared rays-generating material which can generate far infrared rays at ambient temperature and higher are incorporated; through which visible rays can penetrate under the condition that the particles are incorporated; and with which contents can be enclosed; wherein a shading member which shuts out visible rays is provided on an outer surface of the body.

Still another embodiment of the invention is a far infrared rays-generating, containing article comprising a body into which particles of a particular far infrared rays-generating material which can generate far infrared rays at ambient temperature and higher are incorporated; through which visible rays can penetrate under the condition that the particles are incorporated; and with which contents can be enclosed; wherein inside the body a holding member which can hold the contents and which liquid can penetrate through is provided away from the bottom of the body.

### BRIEF DESCRIPTION OF DRAWINGS

Figure 1 shows spectroscopic radiation luminance (35°C) of blue and gray cordierite natural rocks.
Figure 2 shows spectroscopic radiation luminance (35°C) of blue and gray cordierite natural rocks.
Figure 3 illustrates a container with a lid for preserving food as an example of the containing article of the invention.
Figure 4 illustrates an embodiment in which the present invention is applied to a lining of a refrigerator.
Figure 5 is a cross section of another container for preserving food.
Figure 6 is a cross section of still another container with a lid for preserving food.
Figure 7 is a cross section of a baglike container for preserving food.
Figure 8 is a cross section of a liquid-improving container into which liquid is charged, for improving properties of the liquid.
Figure 9 is a cross section of an improved container for preserving food.

### PREFERRED EMBODIMENTS OF THE INVENTION

In the present invention, a raw material constituting the body is a transparent or semi-transparent material and includes (semi)transparent plastics or rubbers such as polypropylene, polyethylene, polycarbonate and acrylic resin; (semi) transparent glass; and semi-transparent paper. Polycarbonate and acrylic resin , which have high transparency, are preferred, since a unit of volume thereof can contain a great deal of the particles and exhibit a sufficient far infrared rays-generating effect. Polycarbonate or acrylic resin containing the particles can also have a large thickness in a state that visible rays can penetrate through the resin; therefore, a far infrared rays-generating article can be made which has advantages such as high strength.

A representative example of the particles of the far infrared rays - generating material incorporated into the body is particles of a colored cordierite (i.e., cordierite-class) natural rock. This mineral is a natural ore produced by eruption of a volcano at an ocean floor and has different properties from those of artificially synthetic ceramics. The surface thereof is rough and largely has white spots in a red, brown, green, purple or silver ground color. Most preferred is a colored cordierite natural rock thrown up on Taiwanese shore at the side of the Pacific Ocean with the passage of extremely long time.

The colored cordierite natural rock can emit or generate far infrared rays or infrared rays even at relatively low temperature, such as ambient temperature (to about -30 from about 60 °C, for example, 25°C) over a long period; therefore, it is suitable for the far infrared rays-generating material. The colored cordierite natural rock per se has strong absorption of impurities in the surroundings, such as rubbish. Thus, if it is left as it is, the far infrared rays-generating effect decreases because of the impurities. However, if it is heated or exposed to sunlight, the effect is recovered.

According to X-ray analysis, the colored cordierite natural rock has a main, single peak of cordierite, and overlapped peaks of feldspar, mordenite, α-quartz, and antigorite. The peaks other than that of cordierite are low in certainty owing to the overlap. Chemical components of the rocks are as follows:

**Table 1**

| Component | Blue cordierite natural rock | Red cordierite natural rock | Serpentine |
|---|---|---|---|
| Na₂O | 4.2 | 4.4 | <0.05 |
| MgO | 1.3 | 1.3 | 36.8 |
| Al₂O₃ | 15.4 | 15.2 | 1.3 |
| SiO₂ | 66.6 | 70.3 | 35.6 |
| P₂O₅ | 0.07 | 0.07 | --- |
| SO₃ | 0.04 | 0.03 | 0.04 |
| K₂O | 0.86 | 0.56 | --- |
| CaO | 3.9 | 4.0 | 3.9 |
| TiO₂ | 0.26 | 0.31 | 0.08 |
| Cr₂O₃ | 0.02 | 0.01 | 0.15 |
| MnO | 0.02 | 0.02 | 0.12 |
| Fe₂O₃ | 2.1 | 3.3 | 5.9 |
| Co₂O₃ | --- | --- | 0.01 |
| NiO | --- | --- | 0.21 |
| ZnO | trace | trace | trace |
| SrO | 0.02 | 0.03 | Trace |
| ZrO₂ | 0.01 | 0.01 | --- |
| Rb₂O | 0.02 | 0.02 | --- |

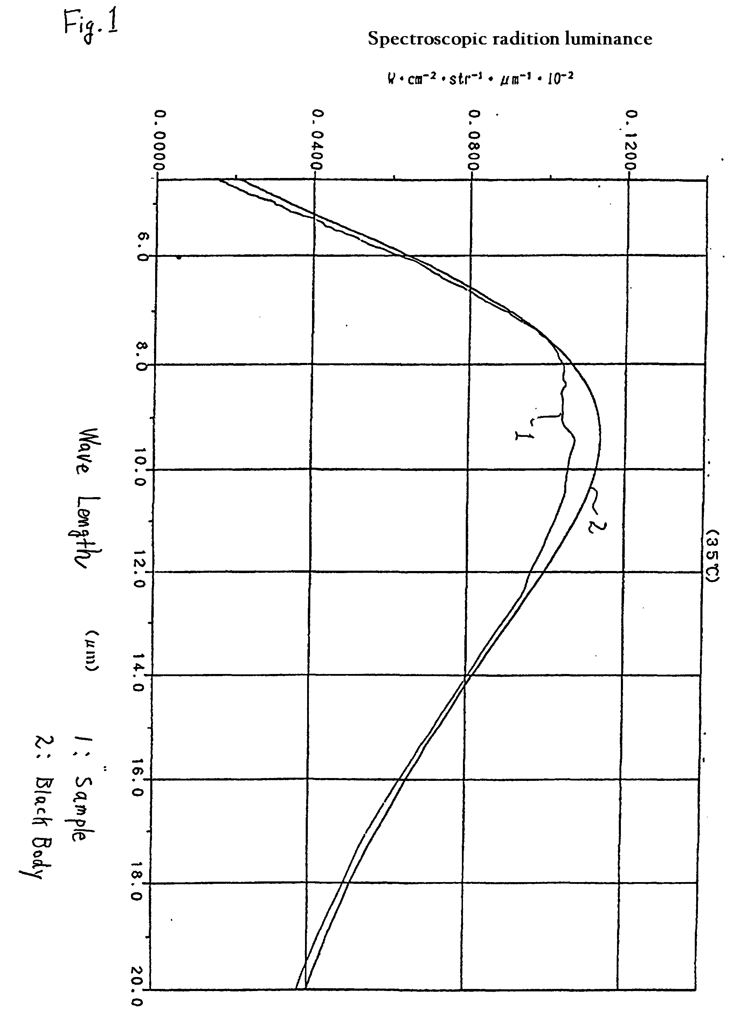

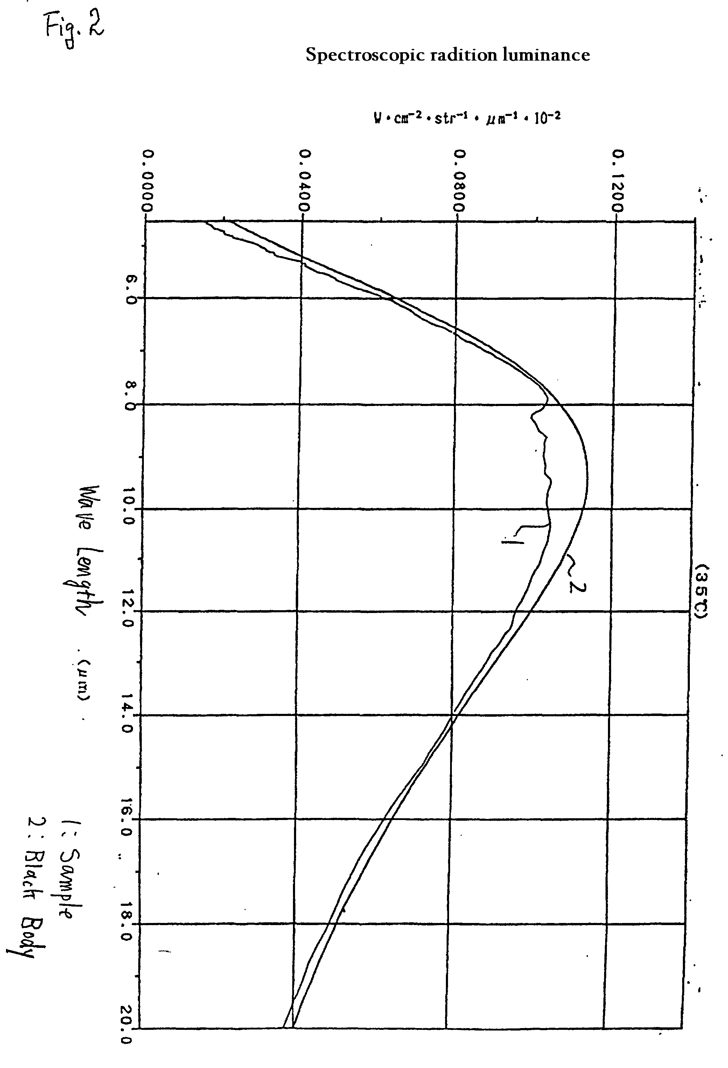

Figure 1 and 2 show spectroscopic radiation luminance (35°C) of blue and gray cordierite natural rocks, respectively. (Far infrared rays: about 4.0 - 50 µm) Far infrared rays-strength of red cordierite natural rock is higher than blue cordierite natural rock.

In addition to the colored cordierite natural rock from Taiwanese shore, a colored cordierite natural rock gathered at the ocean floor, obsidian (specially from Persia), and granite porphyry (specially from Mongolia) are preferred because of height of far infrared rays-generating ability at ambient temperature and relatively low cost. (The granite porphyry is referred to as "bakuhanseki" in Japan.)

The colored cordierite natural rock (specially from Taiwanese shore) is most preferred.

By applying the invention to a containing (or containable) article or accommodating article such as a container, an accommodating box or a storehouse, the effect of the far infrared rays-generating material can act on contents in the containing article. For example, putting food inside the container makes it possible to prevent decay of the food and breeding of bacteria and to obtain deodorant effect. In order to obtain these advantages sufficiently, the container should be made airtight by its lid and its containing member, and to the whole of the container the present invention should be applied. For example, a container into which particles of the far infrared rays-generating material are wholly incorporated can prevent decay of contents far more efficiently and longer than a container having a (semi)transparent portion into which the particles are not incorporated.

If the containing article according to the invention is exposed to natural light at a time and subsequently put into a refrigerator or left at a place which does not receive the direct rays of the sun, the container can exhibit a synergistic preserving-effect.

If the article of the present invention is a paint or film, any object or article coated or covered with the paint or film can have the same function as the far infrared rays-generating article. For example, by coating or covering furniture with the paint or film which contains particles of the far infrared rays-generating material, the furniture can have a far infrared rays-generating effect. Similarly, by coating or covering a building with the same paint or film, the building can have a far infrared rays-generating effect. Furthermore, by coating or covering a lighting article with the same paint or film, the lighting article can have a far infrared rays-generating effect.

If a bag is made of the film into which the particles are incorporated and foods or the like are put into the bag, the far infrared rays from the bag can act on them.

If the article of the present invention is an article having a shape other than a containing article, the article having a shape can have the far infrared rays-generating effect. For example, by putting the article into a container (e.g., a resin container, a glass container, a pan, or a pot), or by putting the article into a room of a building or a compartment of a car, the far infrared rays-generating effect can be exhibited inside the container, the room or the compartment. More specifically, if the article having a shape and containing particles of the far infrared rays-generating material is put into a container for preserving food, it is possible to prevent breeding of bacteria in the food and decay of the food, and obtain a deodorant effect.

The above-mentioned article includes a lining or a wall of a refrigerator, freezer, chiller, or a room such as storehouse. The refrigerator or the room having the lining or the wall is very useful for preserving contents. In these cases, as a resin constituting the lining or wall, polycarbonate and acrylic resin are preferred. When the invention is applied to a lining of the freezer or the chiller, a drawback of freezer-burn is overcome.

In the case in which the article of the present invention is a containing article, other article, or a paint, the average particle size of particles of the far infrared rays-generating material is preferably from 1 to 5 µm. In this case, roughness of the surface of the article of the invention is controlled, and the visible rays-penetration of the article is maintained appropriately. The surface area of the far infrared rays-generating material can also increase. Therefore, the advantages of the present invention can be exhibited highly.

If the article of the present invention is a fiber, a piece of cloth or the like made of the fiber can-have the far infrared rays-generating effect. For example, by making clothing of the fiber, the clothing can exhibit the far infrared rays-generating effect to give anti-bacteria effect, and get rid of body odor. By covering vegetables, meat, fish meat with a piece of cloth or a bag made of the above-mentioned fiber, fall of freshness thereof can be prevented, and generation of odor can be controlled.

In the case in which the article of the invention is a film or a fiber, the average particle size of particles of the far infrared rays-generating material is preferably from 0.1 - 1 µm. In this case, it is possible to control drop in strength of the fiber or the film, roughness of the surface thereof based on the particles, and deterioration of the sense of touch of clothing made of the fiber.

The article of the present invention will be explained referring to a drawing.

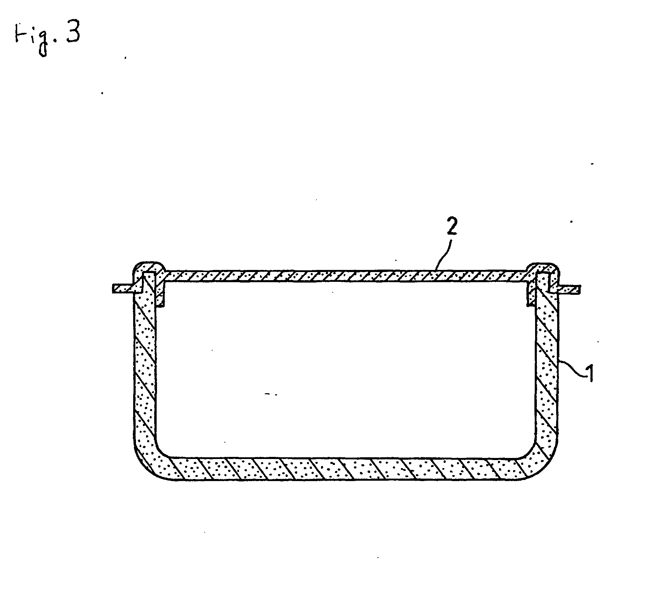

Figure 3 illustrates a container with a lid for preserving food as an example of the containing article of the invention (Embodiment A1).

The container has a containing member 1 with a bottom, and a lid 2. It can be sealed up, and is for preserving food. To both of the containing member 1 and the lid 2, the present invention is applied. In other words, the containing member 1 and the lid 2 respectively correspond to the body into which particles of the far infrared rays-generating material are incorporated. As illustrated by this embodiment, when the present invention is applied to the whole (i.e., the member 1 and the lid 2) with which contents are enclosed, the advantages of the invention are remarkably excellent.

As a raw material of them, polypropylene is used. As the particles of the far infrared ray-generating material, a colored cordierite natural rock thrown up to Taiwanese shore is used.

When the article of the present invention is a container for preserving food as described in the present embodiment, the average particle size of the particles is preferably from 1 to 5 µm for controlling roughness of the surface of the container, maintaining visible rays-penetration at a suitable degree, and increasing the surface area of the far infrared rays-generating material. In the present embodiment, the average particle is about 3 µm.

The particle content in the container (i.e., the containing member 1 and lid 2) of the invention is such a level that visible rays can penetrate through the body into which the particles are incorporated. In this instant, far infrared rays generated from the most inner particle can be emitted outside the body. Preferred for effecting the advantages of the present invention is a body whose transparency or semi-transparency is lost to such a level that when any object or article is watched through the body, the existence or rough outline thereof can be perceived and other than it cannot be perceived by ordinary people. (However, the body must have visible rays-penetration property.) Specifically, the particle content in the article of the invention, such as a container, is usually from 3 to 30 % by weight. In the embodiment illustrated in Fig. 1, the particle content in the containing member 1 is 7 % by weight, and the particle content in the lid 2 is 5 % by weight.

The above-mentioned container can be manufactured by dispersing the particles into a raw material of a resin constituting the body as homogeneously as possible, and molding the resultant in any molding manner.

A test was conducted using a container for preserving foods to which the present invention was applied (Example, into which the colored cordierite natural rock was incorporated) and a container for preserving foods to which the invention was not applied (Comparative Example, into which the colored cordierite natural rock was not incorporated).

The test was a breeding test of colon bacilli (Escherichia coli IFO 3972) and staphylococcus aurei (IFO 12732) using a film adhesion manner. As a solution for bacteria, 1/500 dilution solution of ordinary bouillon containing a 0.2 % extract of meat was used. Samples were left for 24 hours at 35°C for preservation. The number of bacteria before the start of the test and the number after preservation were examined. Results are shown as follows:

**Table 2**

| Bacterial | Examined Sample | Before the start | After 24 hours |
|---|---|---|---|
| | Example | 4.3 × 10⁵ | <10 |
| Colon bacilli | Comparative Example | ditto | 2.7 × 10⁷ |
| | | | |
| | Example | 1.5 × 10⁵ | 2.3 × 10² |
| Staphylococcus aurei | Comparative Example | ditto | 2.1 × 10⁶ |

As understood by the result, in Comparative Example the numbers of both colon bacilli and staphylococcus aurei increased, while in Example most of colon bacilli were died and the number of staphylococcus aurei drastically decreased. Specifically, the numbers of colon bacilli in Comparative Example and Example were respectively 2.7 × 10⁷ and less than 10. In short, the number of colon bacilli in Example was less than 0.001 % of that of colon bacilli in Comparative Example. The numbers of staphylococcus aurei in Comparative Example and Example were respectively 2.1 × 10⁶ and 2.3 × 10². In short, the number of staphylococcus aurei in Example was about 0.2 % of that of staphylococcus aurei in Comparative Example.

When foods were put into the container of Example and preserved at room temperature and inside a refrigerator, decomposition of protein and sugar of the foods was controlled so as to prevent deterioration of the foods for a long time and maintain freshness very much.

Advantages effected by incorporating particles of the far infrared rays-generating material into a body through which visible rays can penetrate will be specifically explained. When particles of the colored cordierite natural rock per se were put into water, respective particles absorbed impurities in water to lose the characteristic effect of the colored cordierite natural rock after a respectively short time. It is very troublesome and inconvenient to take the particles out from water, reactivate them, and use them repeatedly. On the contrary, in the container made of a body into which the particles were incorporated, far infrared rays and infrared rays emitted from respective particles acted on water through the body so that the container could have substantially same advantages as the particles per se. The far infrared rays-generating effect was able to be recovered only by taking the container out from water, and wiping or washing the surface thereof. In short, the container exhibiting satisfactory effects can be used repeatedly. Advantages effected by incorporating the particles into the body can be obtained not only in water but also in other environment such as in air.

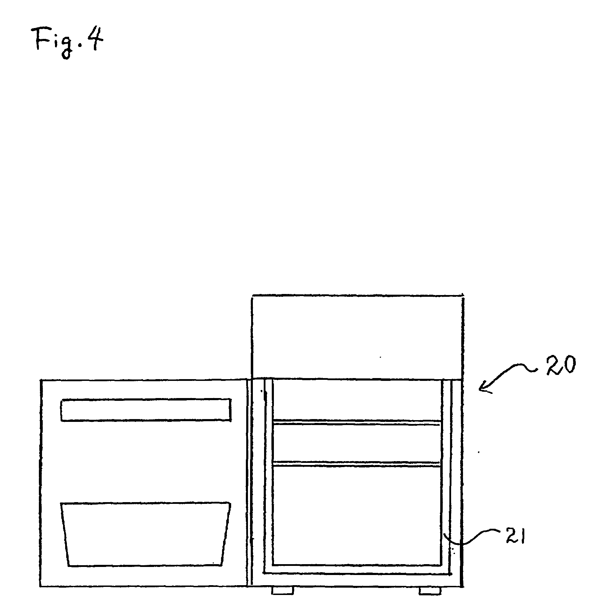

Figure 4 illustrates an another embodiment of the invention. In this embodiment, the invention is applied to a lining 21 of a refrigerator 20. This refrigerator is very helpful for preserving food.

Other embodiments will be explained.

If in a containing article which the particles are incorporated into air is present between contents and the containing article for containing the contents, far infrared rays act on the air so that decay of the contents can be controlled, in particular at the portion contacting the air.

Thus, in a containing article which the particles are incorporated into, the inner surface of the containing article may be uneven. According to this embodiment, the amount of air present between the article and the contents can increase. Thus, the contacting area between the article and the contents decreases, while the area of the contents which contacts the air increases. The air on which far infrared rays act can control decay of materials for a long time. That is, the area having danger of generating decay of contents can decrease.

For the far infrared rays-generating, containing article, it is preferred that if contents are liquid, air is not present between the article and the contents. In this instant, the far infrared rays emitted from the particles act on the liquid. (If air is present, the far infrared rays preferentially act on the air. ) As a result, the far infrared rays can improve on properties of the liquid.

When far infrared rays act on the liquid, clusters of the liquid can be made small. For example, the acts of far infrared rays on water, drinking water, and injecting water or water for internal use respectively make it possible to heighten appropriation for semiconductor-washing water, improve taste, and enhance absorption into the human body. Furthermore, the acts of far infrared rays on gasoline, light oil or kerosene, and cooking oil respectively make it possible to enhance its burning property, and improve taste of cooked food and its life.

When the liquid is blood, the blood can be preserved for a longer about 3 times than usual cases.

The far infrared rays-generating, containing article may be heated directly or indirectly by a heating means. By such heating, far infrared rays appropriately become powerful to enhance act of the far infrared rays.

The embodiments and examples described above, in particular the containing article such as a container, can exhibit sufficient advantages, if it is used inside a refrigerator or a room. However, a container or a accommodating box which is left outdoors for a long time, receives natural light excessively. It is presumed that this matter allows generation of far infrared rays from the far infrared rays-generating particles to enhance excessively. Thus, an inconvenience may occur that contents are burned to get discolored by strong far infrared rays. For example, if fish meat of a tunny is put into the above-mentioned container, its surface gets discolored. One embodiment for preventing the inconvenience is a far infrared rays-generating, containing article comprising a body into which particles of a far infrared rays-generating material which can generate far infrared rays at ambient temperature and higher are incorporated; through which visible rays can penetrate under the condition that the particles are incorporated; and with which contents can be enclosed; wherein a shading member which shuts out visible rays is provided on an outer surface of the body.

For the containing article, a representative example of the shading member is a shading layer.

If the containing article of the invention has such a shading layer, an inconvenience can be avoided that, after contents are put into the containing article, the particles in the body continue to receive natural light from the surrounding so that far infrared rays generated excessively may be applied to the contents. In other words, before the contents are put into the containing article, this article receives natural light from its inner surface to obtain the far infrared rays-generating effect; after the contents are put into the containing article, the contents are preserved under a condition that they receives only far infrared rays generated from the particles which are not exposed to light.

Far infrared rays generated from the particles do not emit outside and are applied to only the inside of the containing article. This is another advantage of the embodiment.

The time when the inner surface of the containing article should be exposed to natural light before contents are put into the article is not restrictive. Sufficient is a time necessary for operation for putting the contents into the article, for example, 0.5 - 2, 2 - 5 or 5 - 10 minutes.

The present embodiment is usefully applied to containing articles which are left or used outdoors.

In the far infrared rays-generating, containing article having a shading layer, the shading layer may partly have visible rays-penetration. When the containing article is left outdoors, it is generally preferred for preventing decay and change of color that the shading layer completely shuts out sunlight or natural light. However, if sunlight can penetrate through the shading layer partly, a penetration amount of sunlight can be adjusted. The adjustment makes it possible to control a degree of amplification of far infrared rays emitted from the ray-generating particles, so as to obtain intensity of the far infrared rays in accordance with contents.

Next, the far infrared rays-generating container having a shading layer according to the present invention will be described referring to drawings.

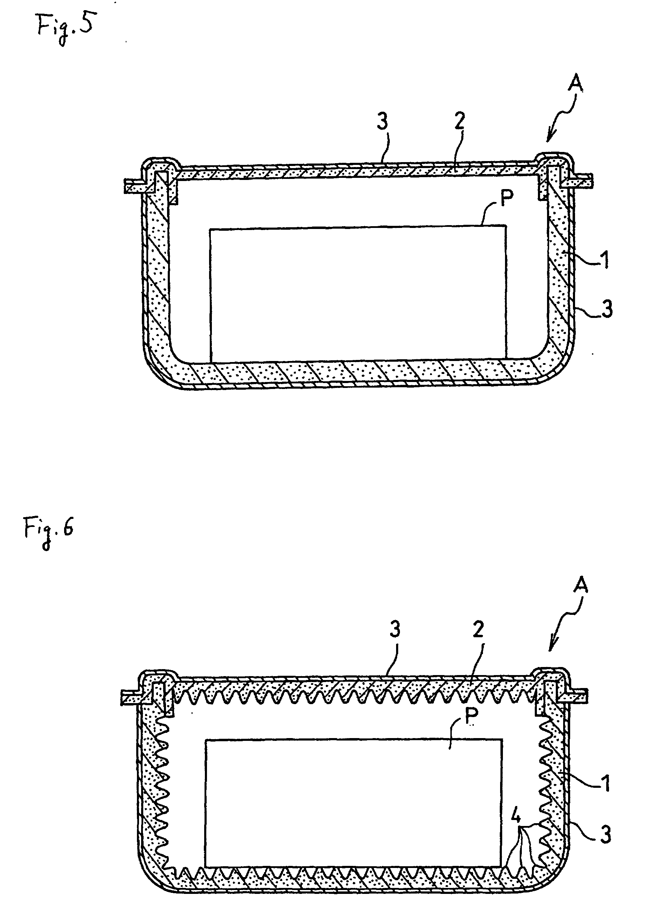

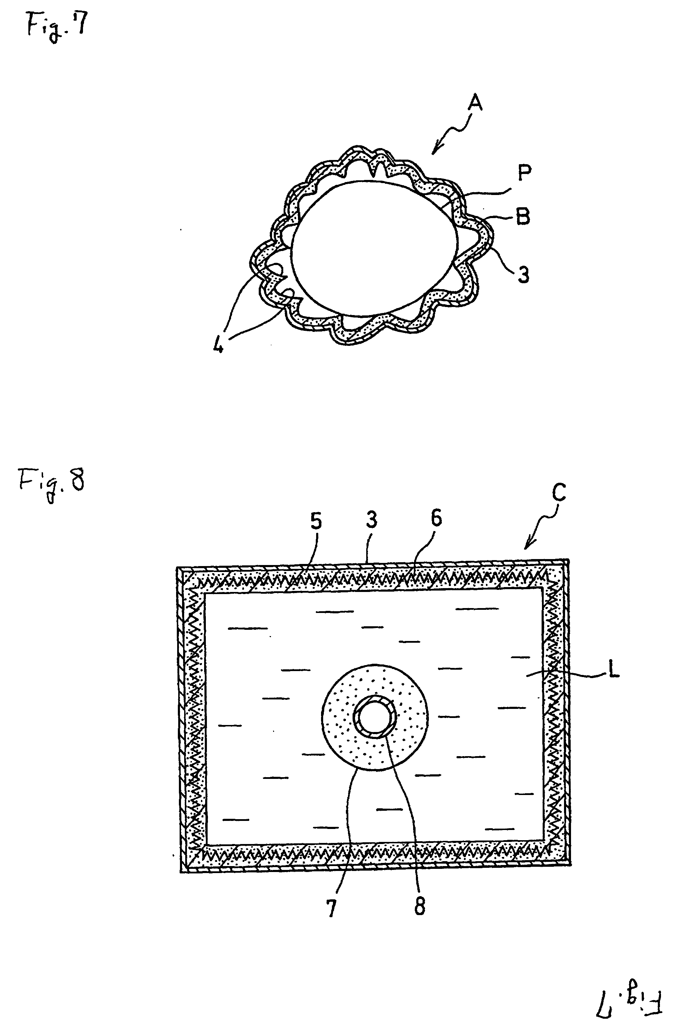

Figure 5 is a cross section of a container A for preserving food according to Embodiment B1. The container A comprises a containing member 1 with a bottom, and a lid 2, in which contents P such as meat and vegetables are put. The containing member 1 and the lid 2 are made of resin bodies into which particles of a far infrared rays-generating material are incorporated. Specifically, they are made of the same raw materials as the container shown in Fig.3. This container A may be however for being used outdoors.

The outer surfaces of the containing member 1 and the lid 2 are covered with shading layers 3 through which visible rays cannot penetrated. The shading layers 3 can overcome a drawback that natural light penetrates through the bodies of the containing member 1 and the lid 2 so as to excessively intensify generation of far infrared rays from the particles incorporated into the bodies. The inner surface of the shading layer 3 may be made of a light-reflecting material such as aluminum, so that the far infrared rays directed to the outside of the container A can return back to the inside of the container A.

In this embodiment, even if the container is left outdoors, decay of the contents and discoloration can be controlled.

If the inner surface of the containing member 1 with a bottom and the inner surface of the lid 2 absorb impurities such as rubbish, and organic and inorganic materials, the impurities can be easily removed off from the inner surfaces by wiping the surfaces with cloth or washing the surfaces.

Far infrared rays-generating capability of the particles in the container of the invention can be recovered by exposing the container to far infrared rays-including light such as sunlight, for example, when the contents P are taken off, replaced, or when the inner surface of the container is washed. As a result, the container can maintain the effect of preventing decay of the contents P by the far infrared rays for a long time.

A decay test was conducted by using the above-mentioned container A (which particles of the colored cordierite natural rock were incorporated into and which had the shade layer 3), a reference container (which particles of the colored cordierite natural rock were incorporated into and which had not any shading layer 3), and comparative container (which colored cordierite natural rock were not incorporated into and which had not any shading layer 3). In the test, pork, which is considered to be easily putrefied, was let inside the containers, and then the containers were put into a refrigerator having such a transparent window that its inside could be observed. The pork in the reference container and the pork in the container A were acceptable to eat, respectively, 3-4 times and 5-6 times as long as the pork in the comparative container, at portions contacting air. The reason why decay of the portions contacting air was controlled would be that far infrared rays act on air.

Figure 6 is a cross section of a container A with a lid for preserving food according to Embodiment B2.

The container A of the above-mentioned embodiment B1 has *a* flat inner surface. In the B1, decay of the air-contacting portion of the contents P can be controlled for a long time, while decay of the portion which does not contact air, that is, the portion directly contacting the container A progresses. Accordingly, Embodiment B2 is made so that the inner surfaces of the container A for preserving food (the containing member 1 and the lid 2) may have unevenness in a waved state. As a result, the contact area between the containing member 1 and the contents P decreases while the contact area between air and the contents P increases so as to decrease the area where decay of the contents P is liable to progress.

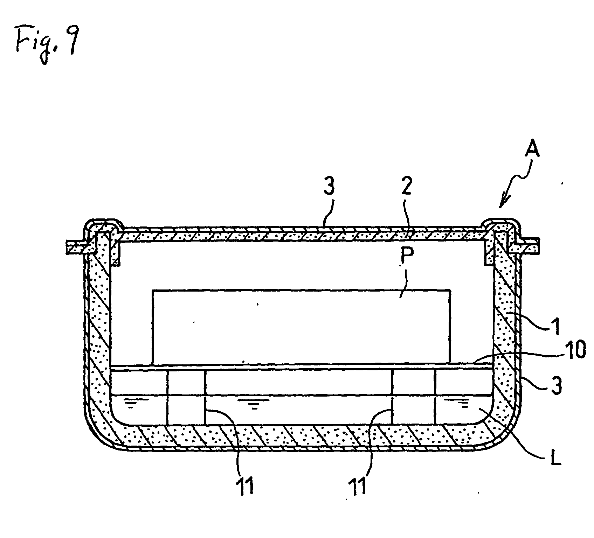

Figure 7 is across section of a baglike container B for preserving food of Embodiment B3. The embodiment is a bag B made of a soft body into which particles of a far infrared rays-generating material are incorporated. An opening of the bag B can be sealed up. The bag B has unevenness 4 in a waved state so that the contacting area between the bag B and contents P can decrease and the contacting area between the air and the contents P can increase.

In the above-mentioned embodiments, the contents P are solid; however, in the following embodiment contents are liquid.

Figure 8 is a cross section of a liquid-improving container C into which liquid L is charged, for improving properties of the liquid L, according to Embodiment B4.

The container C is made so that far infrared rays can act on the liquid L and has substantially the same structure as the container A described as the B1 embodiment. That is, the container C has a body 5 which particles of a far infrared rays-generating material are incorporated into and which completely covers the liquid L. The outer surface of the body 5 is covered with a shading layer 3. According to such an embodiment, far infrared rays from the far infrared rays-generating material can be directed to only the liquid L inside the container C.

When far infrared rays act on the liquid L, a necessary intensity of the rays is bigger 500 or 600 - 5000 or 6000 times than when the rays act on air. If the container C contains the liquid L and air, far infrared rays from the container C preferentially act on the air and hardly act on the liquid L. Thus, it is preferred that if possible the container C does not contain any air.

The body 5 has, in its inner portion, a heater 6 for heating the particles. The heater 6 is a heat-generating member for generating heat by turning on electricity. Any heating means, instead of the heater 6, may be located at the space inside or outside the container C. By heating the particles incorporated into the body 5, intensity of far infrared rays generated from the particles increases, so that the rays can strongly act on the liquid L.

A ball 7 emitting far infrared rays is put inside the container C. The ball 7 has visible-rays penetration and is made of a transparent material into which particles of a far infrared rays-generating material are incorporated, and has in its inner portion a light-reflecting material for directing the far infrared rays to the outside of the ball 7. According to the embodiment, very strong far infrared rays can act on the liquid L.

Figure 9 is a cross section of an improved container for preserving food according to Embodiment B5.

In the embodiment, inside the same container A as shown in Fig. 5 a netlike member 10 is horizontally set away from the bottom thereof. Contents P such as breed are put on the member 10, and water as the liquid L is put inside the container A so that the surface of the water may be positioned below the member 10. This embodiment can exhibit not only anti-bacteria effect but also a mold-preventing effect and is very suitable for preserving foods. Instead of the netlike member 10, use is made of any holding member which can hold contents and which liquid such as water can penetrate through (preferably as much as possible ). The netlike member is preferably made of a (semi)transparent material, a material through which visible rays can penetrate; or a body to which the invention is applied.

The holding member is preferably such that the contacting area between it and the contents is as small as possible.

The netlike member 10 or the holding member may be supported by legs 11, as shown in Fig. 9. Alternatively, a cylinder may be fixed around the member, and the cylinder may be inserted and fitted into the container A. The holding member may be made in a hemisphere form, and supported inside the container A under such a condition that the lowest portion of the member may be away from the bottom of the container A.

The shading layer 3 may be one through which natural light can penetrate partly. Examples thereof include a shading layer having a hole or many holes, and a shading layer having a portion through which visible rays can penetrate. Such shading layers make it possible to control a penetration amount of natural light, thereby adjusting a degree of enhancing the intensity of far infrared rays from the particles. Thus, an appropriate intensity of the rays can be obtained in accordance with contents, for example, rice and meat.

Figures 5 - 9 illustrate embodiments having a shading layer 3. However, containing articles used in, for example, a refrigerator or a room can exhibit satisfactory effect, even if they do not any shading layer. Therefore, the same embodiments as shown in Figs. 5 - 9 except they do not have any shading layer are very preferable for utility good used in, for example, a room or a refrigerator. In short, the present invention embraces the same embodiments as shown in Figs. 5 to 9, except that the shading layer 3 is not present.

In embodiments shown in Figs. 5 and 6, when the shading layers 3 are regarded as an outer case of a refrigerator, and an outer wall of a room or a storehouse, the containing member 1 and the lid 2 can be regarded as a lining or an inner wall thereof. Such embodiments are also very preferable in the invention.

The above-mentioned embodiments relate to containers for preserving the contents P such as food, or improving the liquid L. However, the present invention can also relate to, for example, a container in which a cosmetic such as cream, shampoo, or toilet water is charged, for preventing deterioration thereof.

## Claims

1. A far infrared rays-generating article **characterized by** comprising a body into which particles of a far infrared rays-generating material which can generate far infrared rays at ambient temperature and higher are incorporated, and through which visible rays can penetrate under the condition that the particles are incorporated, **characterized in that**, the far infrared rays-generating material is one selected from the group consisting of a colored cordierite natural rock, obsidian and granite porphyry.

2. A far infrared rays-generating article according to claim 1, wherein the far infrared rays-generating material is a colored cordierite natural rock from Taiwan.

3. A far infrared rays-generating article according to any claim 1 or 2, which is a containing article for containing contents.

4. A far infrared rays-generating article according to claim 3, wherein the containing article is a container which has a containing member and a lid and can be sealed up; visible rays can penetrate through the whole of the containing member and the lid; and into the whole the particles are incorporated.

5. A far infrared rays-generating article according to any one of claim 3 or 4, wherein a shading member which shuts out visible rays is provided on an outer surface of the body.

6. A far infrared rays-generating article according to any one of claim 3 to 5, wherein inside the body a holding member which can hold contents and which liquid can penetrate through is provided away from the bottom of the body.

7. A far infrared rays-generating article according to claim 1, which is a lining.

8. A far infrared rays-generating article according to claim 1, which is a paint or film.

9. A far infrared rays-generating article according to claim 1, which is a fiber.

## Patentansprüche

1. Ein Ferne Infrarotstrahlen erzeugender Gegenstand, **dadurch gekennzeichnet, dass** er einen Körper umfasst, in welchen Partikel aus einem Ferne Infrarotstrahlen erzeugenden Material eingelagert sind, das Ferne Infrarotstrahlen bei Umgebungstemperatur und höherer Temperatur erzeugen kann, und durch welchen sichtbare Strahlen auch in dem Fall hindurchtreten können, dass die Partikel eingelagert sind, **dadurch gekennzeichnet, dass** das Ferne Infrarotstrahlen erzeugende Material eines ist, welches aus der Gruppe ausgewählt ist, die aus farbigem Cordierit-Naturgestein, Obsidian und Granit-Porphyr gebildet ist.

2. Ein Ferne Infrarotstrahlen erzeugender Gegenstand nach Anspruch 1, bei welchem das Ferne Infrarotstrahlen erzeugende Material ein farbiges Cordierit-Naturgestein aus Taiwan ist.

3. Ein Ferne Infrarotstrahlen erzeugender Gegenstand nach einem der Ansprüche 1 oder 2, welcher ein Aufnahme-Teil zum Aufnehmen von Inhaltsgut ist.

4. Ein Ferne Infrarotstrahlen erzeugender Gegenstand nach Anspruch 3, bei welchem das Aufnahme-Teil ein Behälter ist, welcher ein Aufnahmeelement und einen Deckel aufweist und welcher abdichtend verschlossen werden kann; bei welchem sichtbare Strahlen durch die Gesamtheit des Behälterelements und des Deckels hindurchtreten können; und bei welchem in diese Gesamtheit die Partikel eingelagert sind.

5. Ein Ferne Infrarotstrahlen erzeugender Gegenstand nach einem der Ansprüche 3 oder 4, bei welchem ein Beschattungselement, welches sichtbare Strahlen ausschließt, an einer äußeren Oberfläche des Körpers vorgesehen ist.

6. Ein Ferne Infrarotstrahlen erzeugender Gegenstand nach einem der Ansprüche 3 bis 5, bei welchem innerhalb des Körpers ein Halteelement mit Abstand von dem Boden des Körpers vorgesehen ist, welches Inhaltsgut halten kann und durch das eine Flüssigkeit hindurchtreten kann.

7. Ein Ferne Infrarotstrahlen erzeugender Gegenstand nach Anspruch 1, welcher eine Auskleidung bildet.

8. Ein Ferne Infrarotstrahlen erzeugender Gegenstand nach Anspruch 1, welcher eine Farbe oder eine Folie darstellt.

9. Ein Ferne Infrarotstrahlen erzeugender Gegenstand nach Anspruch 1, welcher eine Faser darstellt.

## Revendications

1. Article produisant un rayonnement infrarouge lointain, **caractérisé en ce qu'**il comprend un corps dans lequel sont incorporées des particules d'un matériau produisant un rayonnement infrarouge lointain, qui sont capables de produire un rayonnement infrarouge lointain à température ambiante et supérieure, et à travers lequel des rayons visibles peuvent pénétrer à condition que les particules soient incorporées,
**caractérisé en ce que** le matériau produisant un rayonnement infrarouge lointain est choisi parmi le groupe comprenant de la roche naturelle de cordiérite colorée, de l'obsidienne et du porphyre de granit.

2. Article produisant un rayonnement infrarouge lointain selon la revendication 1, dans lequel le matériau produisant un rayonnement infrarouge lointain est une roche naturelle de cordiérite colorée en provenance de Taïwan.

3. Article produisant un rayonnement infrarouge lointain, selon l'une ou l'autre des revendications 1 et 2, qui est est un article contenant destiné à contenir un contenu.

4. Article produisant un rayonnement infrarouge lointain, selon la revendication 3, dans lequel l'article contenant est un conteneur qui comprend un élément conteneur et un couvercle capable d'être étanché ; les rayons visibles étant capables de pénétrer à travers à la totalité de l'élément conteneur et du couvercle ; et dans lequel les particules sont incorporées dans la totalité.

5. Article produisant un rayonnement infrarouge lointain, selon l'une ou l'autre des revendications 3 et 4, dans lequel un élément formant écran qui coupe les rayons visibles est prévu sur une surface extérieure du corps.

6. Article produisant un rayonnement infrarouge lointain, selon l'une quelconque des revendications 3 à 5, dans lequel est prévu à l'intérieur du corps un élément de maintien capable de maintenir un contenu et capable d'être pénétré par un liquide, en éloignement du fond du corps.

7. Article produisant un rayonnement infrarouge lointain, selon la revendication 1, qui est un doublage.

8. Article produisant un rayonnement infrarouge lointain, selon la revendication 1, qui est une peinture ou un film.

9. Article produisant un rayonnement infrarouge lointain, selon la revendication 1, qui est une fibre.
